# EUROPEAN PATENT APPLICATION

(11) **EP 2 087 979 A1**
(43) Date of publication of application: **12.08.2009**
(21) Application number: 08425073.7
(22) Date of filing: 08.02.2008
(51) Int. Cl.: B29B 7/42, B29B 7/60, B29B 7/90, B01F 3/12, B01F 3/14, B01F 7/08, B01F 15/02, B29C 47/02, B29C 47/10, B29C 53/60, B32B 1/08, B32B 5/28, B32B 5/30, B29C 67/24, B29C 70/02, B29D 23/24, F16L 9/16

(54) **Apparatus for mixing granular inert material and resin binder in the manufacture of laminated articles made of composite material**

(71) Applicant: VEM S.p.A., 40033 Casalecchio di Reno (Bologna) (IT)
(72) Inventor: Ferri, Ugo, 20146 Milano (IT)
(74) Representative: Modiano, Micaela Nadia

(57) **Abstract**

An apparatus for mixing granular inert material with a resin binder in order to form, on a rotating cylindrical mandrel (4), a tubular manufactured article composed of an inner layer (2) which adheres to the surface of the mandrel, an outer layer (3) and an intermediate layer (5, 6) constituted by a uniform agglomerate obtained from an amalgamation of the granular inert material with the resin binder, comprising at least one mixing line composed of a feeder (12, 13) which is connected to a duct (14, 15) for feeding the granular inert material and a discharge outlet (17, 18), a mixing device (23, 24) which has an intake port (21, 22) which is suitable to receive the granular inert material from the discharge outlet (17, 18) of the feeder and connections (48, 49) for feeding the resin binder in the mixing device, the mixing device being suitable to form the uniform agglomerate and to apply it onto the inner layer (2) so as to form the intermediate layer.

## Description

The present invention relates to an apparatus for mixing granular inert material and resin binder in the production of laminated articles made of composite material, particularly tubular laminated articles.

Laminated tubular articles are known which are constituted by a plurality of layers obtained by wrapping structural fibers, mainly glass fibers, impregnated with resin.

Generally, the inner layer and the outer layer of the laminated article are separated by an intermediate layer constituted by a mixture of resin (binder) and granular inert material (generally sand).

These articles are produced by wrapping on a rotating mandrel:
- an inner layer, composed of a bundle of structural fibers (generally made of glass) impregnated with resin (binder) by immersion or contact or by gravity or spraying;
- an intermediate layer of granular inert material (generally sand) impregnated with resin (binder) applied by gravity;
- an outer layer, composed of an additional bundle of structural fibers (generally made of glass) impregnated with resin (binder) generally according to the same technology used for the inner layer.

The above-described technology for manufacturing laminated articles has the severe drawback that it does not allow to control the impregnation and therefore the agglomeration of the granular inert material with the binder. This leads to the risk of forming a nonuniformity in the intermediate layer of the manufactured article which consists of regions predominantly constituted by resin and other regions predominantly constituted by inert material. This is due to the fact that the amalgamation between the inert material and the resin is due substantially to the physical process linked to the surface tension and capillary action of the binder. Since the manufactured article must ensure the characteristics of mechanical strength and impermeability to the liquids conveyed therein even in high-pressure conditions, any damage caused by a region with poor cohesion and with a predominance of inert material is greater than the malfunction that arises from the opposite situation. For this reason, there is a tendency to increase the amount of resin distributed on the sand, with a consequent decrease in the efficiency of the production process and an increase in waste and in the risk of pollution.

The aim of the present invention is to provide an apparatus which optimizes the process for mixing the granular inert material and the binder in order to ensure the uniformity of the agglomerate and optimize the mixing ratio and accordingly the production parameters.

Within this aim, an object of the present invention is to provide an apparatus which is capable of modifying the mixing ratios according to the requirements and the external conditions of the production process.

Another object of the present invention is to provide an apparatus which is simple and therefore cheap to manufacture and which is reliable in operation and capable of offering qualitatively uniform products.

This aim and these and other objects which will become better apparent hereinafter are achieved with an apparatus for mixing granular inert material with a resin binder in order to form, on a rotating cylindrical mandrel, a tubular manufactured article composed of an inner layer which adheres to the surface of the mandrel, an outer layer and an intermediate layer constituted by a uniform agglomerate obtained from an amalgamation of said granular inert material with said resin binder, characterized in that it comprises at least one mixing line composed of a feeder which is connected to a duct for feeding said granular inert material and a discharge outlet, a mixing device which has an intake port which is suitable to receive said granular inert material from said discharge outlet of said feeder, and connections for feeding said resin binder in said mixing device, said mixing device being suitable to form said uniform agglomerate and to apply it onto said inner layer so as to form said intermediate layer.

Further characteristics and advantages of the present invention will become better apparent from the following detailed description of a preferred embodiment thereof, illustrated by way of non-limiting example in the accompanying drawings, wherein:
Figure 1 is an axial elevation view of a mixing apparatus associated with a system for producing tubular manufactured articles;
Figure 2 is a partially sectional side view, taken along a vertical plane, of the apparatus according to the invention;
Figure 3 is a sectional plan view of the apparatus, taken along the line III-III of Figure 2;
Figure 4 is a sectional plan view of the apparatus, taken along the line IV-IV of Figure 2;
Figure 5 is a view of the motor drive assembly of the apparatus according to the invention.

With reference to the figures, a mixing apparatus is generally designated by the reference numeral 1 and is composed substantially of the pairing of two mixing lines which are capable of providing respective flows of agglomerate composed of inert granular material, generally sand, and intimately mixed with a binder, generally resin.

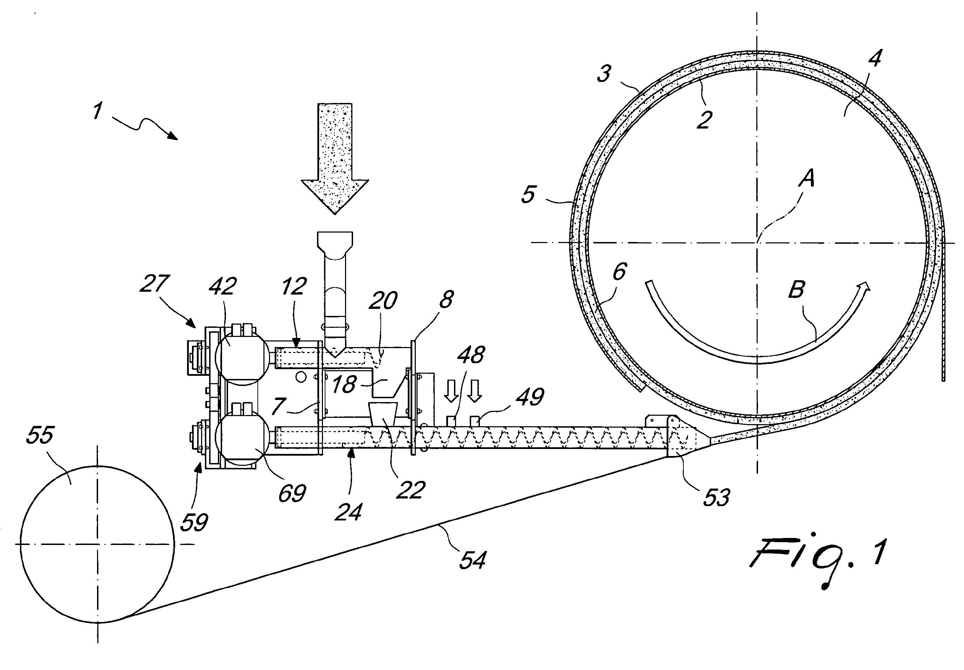

The two flows of agglomerate are deposited between two layers 2, 3 (Figure 1) of structural fibers, generally glass fibers, impregnated with a binder, generally resin, and are wrapped in a helical arrangement on a cylindrical mandrel 4 which rotates about a horizontal axis A in the direction B, so as to form a tubular manufactured article of which the layer 2 constitutes the internal lining, the layer 3 constitutes the outer wrapping and the agglomerate, provided by the mixing apparatus, constitutes the intermediate layer, which is designed to stiffen the tubular manufactured article and which, in the example described here, is assumed to be provided by superimposing a pair of layers 5, 6, each of which is dispensed by a mixing line. The structure of the mandrel 4 and the means for its movement referenced here are assumed to be of a type known in the background art and are not described hereinafter for the sake of conciseness in description. In particular, it is assumed that the mandrel is actuated with a rotary motion about the axis A combined with an advancement motion in the direction B, such that the advancement stroke performed at each turn of the mandrel is equal to the pitch of the helical wrapping with which the layers are applied in order to provide the complete surface covering of the mandrel.

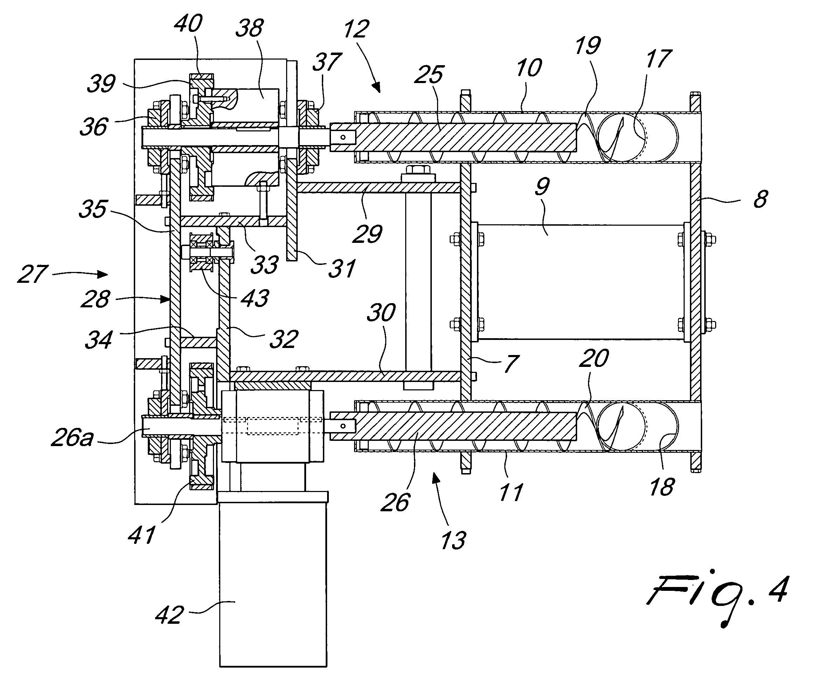

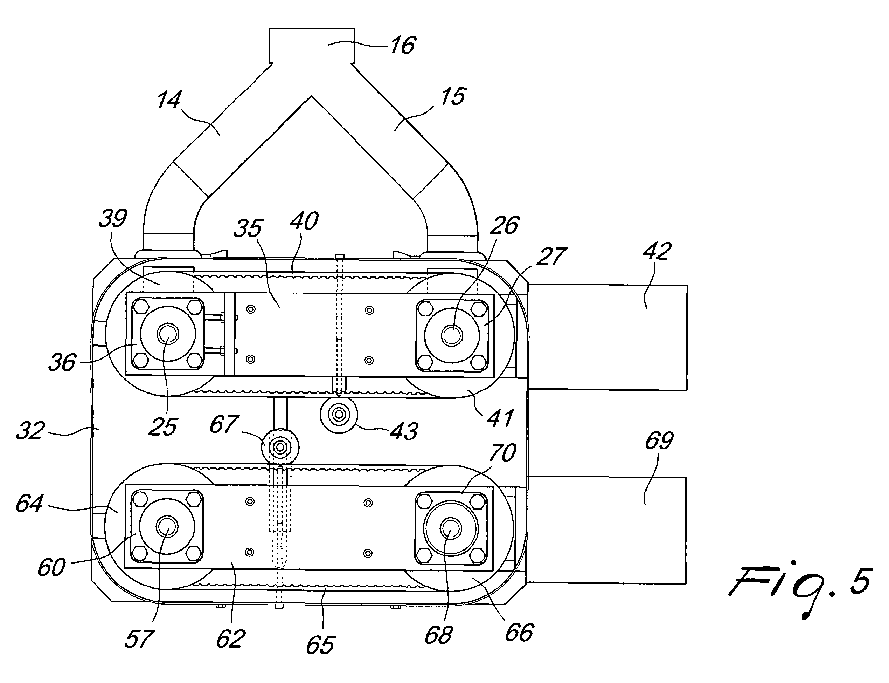

The apparatus 1 is composed (Figure 4) of a frame which comprises two mutually parallel walls 7, 8, which are stiffened by a horizontal connecting surface 9. In the opposite lateral portions of the walls 7, 8 there are respective circular openings, through which two tubular elements 10, 11 are guided which are mutually parallel and are fixed to the walls 7, 8. The tubular elements 10, 11 constitute the jackets of two screw feeders 12, 13 for feeding the granular inert material which contributes to the formation of the intermediate layer 5. The inert material is unloaded into the feeders 12, 13 through respective distribution tubes 14, 15 (Figure 5) which branch out in a fork-like arrangement from a common feeder pipe 16 which is connected to a container of the granular inert material.

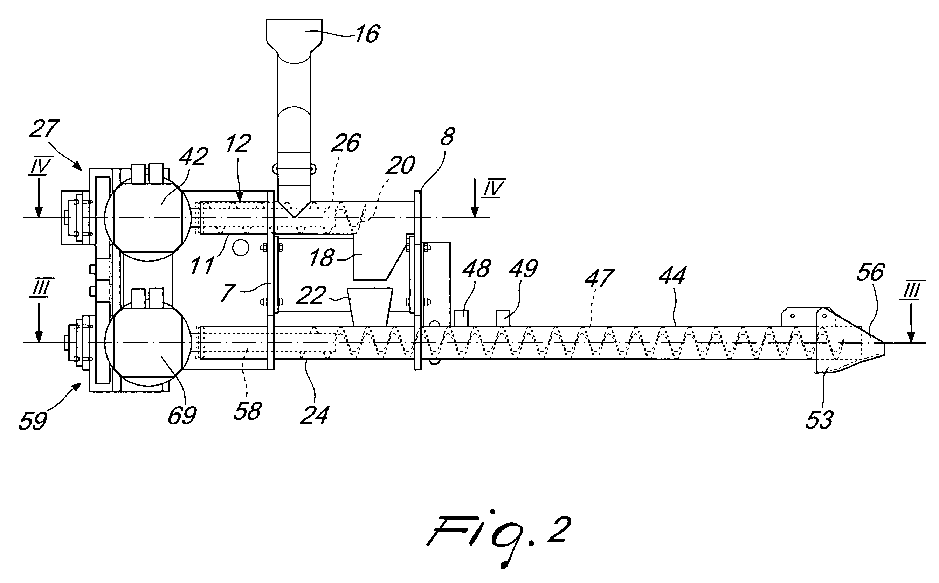

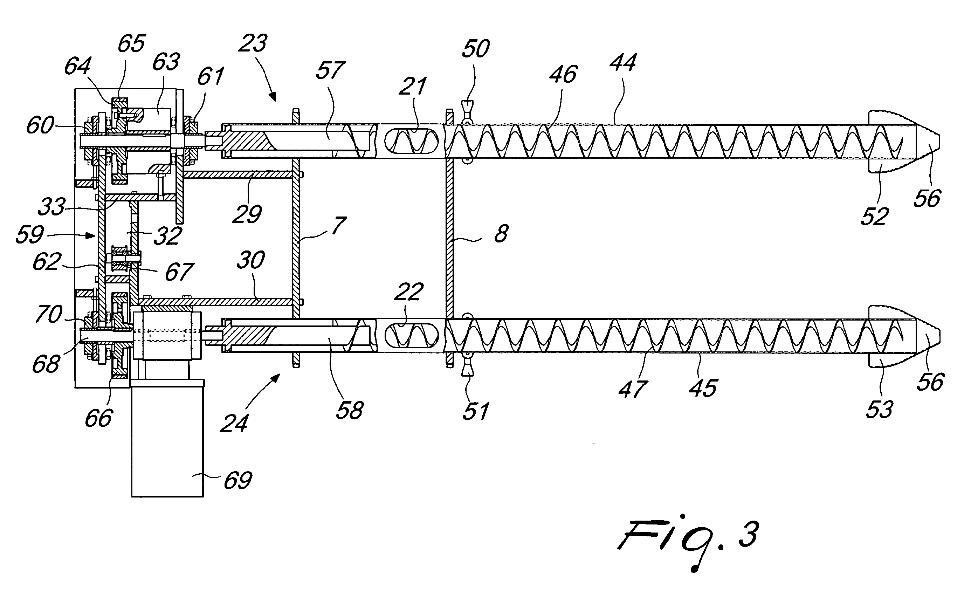

The jackets 10, 11 of the feeders are provided in a lower region with discharge openings 17, 18, through which the granular inert material, fed from above through the tubes 14, 15 and pushed by screw feeders 19, 20 of the feeders 12, 13, is conveyed toward intake ports 21, 22 of two underlying mixing devices 23, 24 (Figures 2, 3), in which the mixing with a binder is performed and the amalgamation of the agglomerate intended to form on the mandrel 4 the intermediate layer 5, 6 of the manufactured article is completed.

For the actuation of the two screw feeders 12, 13, the shafts 25, 26 have respective portions whose diameter is smaller than the one on which the screw feeders 19, 20 are wound, said screw feeders lying outside the jackets 10, 11 and being connected to a motor drive assembly, generally designated by the reference numeral 27 (Figure 4). Said assembly comprises a box-like structure 28, which is composed of a pair of walls 29, 30 which are rigidly coupled at right angles to the wall 7 and to the front edges of which two plates 31, 32 which are parallel to the wall 7, are rigidly coupled. The plates 31, 32 are joined by a flange 33 which cantilevers out from the plate 32 and supports, with a rib 34, an elongated plate 35, hereinafter referenced as strip, which is flat and parallel with respect to the plate 31.

Two supports 36, 37 (Figures 4, 5) are fixed to the plate 31 and to the strip 35, and respective bearings for rotary support of the shaft 25 of the screw feeder 19 are arranged therein.

A friction clutch system 38 is arranged on the portion of the shaft 25 that lies outside the jacket 10, and a pulley 39 is functionally associated therewith and is provided with a peripheral set of teeth on which a toothed belt 40 meshes. The friction clutch system 38 comprises pneumatically-actuated elements in order to allow the rotary coupling and uncoupling of the pulley 39 from the shaft 25 when the screw feeder 19 is to be actuated or respectively stopped.

The belt 40 is closed in a loop around a second pulley 41, which is keyed to the output shaft 26a of a gearmotor 42 which is coupled by means of a flange, in a cantilever arrangement, to the wall 30. The actuation of the gearmotor produces the direct actuation of the screw feeder 20 and the rotary actuation of the screw feeder 19 by means of the transmission composed of the pulley 41, the belt 40, the pulley 39 and the friction clutch system 38. A belt tensioning roller 43 (Figures 4 at 5) is conveniently fixed to the plate 32 in a cantilever arrangement, avoids the skipping of the belt 40 and thus ensures a uniform dosage of the inert material toward the mixing devices 23, 24.

The mixing devices 23, 24 are constructively similar to the above-described feeders 12, 13. As more clearly shown by Figure 3, the reference numerals 44, 45 designate the cylindrical jackets, in which the screw feeders 46, 47 rotate which are arranged below the feeders 12, 13 and run parallel to them. The jackets 44, 45, downstream of the wall 8, are provided with connections 48, 49 (Figures 1, 2), through which the binder and any catalysts to be mixed with the granular inert material conveyed by the feeders 12, 13 are introduced in the jackets.

The two mixers 23, 24 are significantly longer than the feeders 12, 13 in order to ensure a suitable homogeneous amalgamation of the agglomerate that forms the intermediate layer 5, 6. The jackets 44, 45, in a manner similar to the jackets 10, 11, are supported in the walls 7, 8 and are connected thereto by way of fixing means 50, 51 of any type, capable of allowing quick disassembly of the screw feeders and to perform inspections and the necessary mixer cleaning operations.

At the discharge outlets of the jackets 44 and 45 there are two respective bending elements 52, 53 (Figures 1, 2, 3) for guiding and wrapping ribbons 54 unwound from respective reels 55. The ribbons 54 are made of permeable material, for example fabric, non-woven fabric and the like, in order to be able to be impregnated by the binder and facilitate the adhesion of the agglomerate to the layers 2 and 3 of the manufactured article. Each bending element 52, 53 is constituted by a sort of funnel-shaped chute, which has a nozzle 56 for expelling the agglomerate, which is aligned with the axis of the respective screw feeder 46, 47. The bending elements 52, 53 are intended to accompany and longitudinally bend upward the lateral edges of the ribbons 54, which are made to slide by traction below them, so as to wrap them around the agglomerate that exits from the nozzles 56 of the two mixers 23, 24.

In a manner similar to the feeders 12, 13, the shafts 57, 58 of the screw feeders 46, 47 also have reduced-diameter portions connected to a motor drive assembly designated by the reference numeral 59 (Figure 3). The shaft 57 can rotate, by means of bearings, in supports 60, 61 which are fixed to the plate 31 and to a second strip 62, which is coplanar and arranged below the strip 35. A friction clutch system 63 is arranged on the shaft 57 and a toothed pulley 64 is functionally associated therewith and is engaged by a toothed belt 65. The friction clutch system 63 is similar to the one that actuates the friction clutch system 38 of the feeder 12 described above, i.e., it comprises a pneumatically-actuated element to allow the coupling and uncoupling of the pulley 64 with respect to the shaft 57 and therefore of the screw feeder 46. The belt 65 is closed in a loop around a second pulley 66 and tensioned by means of a belt tensioning roller 67 (Figure 5), which is fixed in a cantilever fashion on the plate 32. The pulley 66 is keyed onto an output shaft 68 of a gearmotor 69, which is flanged in a cantilever fashion to the wall 30 of the frame 28. The shaft 68 is connected to the shaft 58 of the screw feeder 47 and is supported in a bearing which is accommodated in a support 70 which is fixed to the strip 62 which is coplanar to the strip 35.

The operation of the apparatus according to the invention, albeit entirely evident from the provided description, is as follows. The granular inert material, fed from the tube 16 and from the branches 14, 15 through the discharge outlets 17, 18 and the intake ports 21, 22, is conveyed into the feeders 12, 13 and then transferred by the screw feeders 19, 20, with a regular flow, into the mixers 23, 24, where it receives the addition of the resin binder and the catalysts fed through the connections 48, 49.

The mixing action performed by the screw feeders 46, 47, as the agglomerate advances toward the output nozzles 56, forms an increasingly homogeneous amalgamation. As the agglomerate exits from the nozzles 56, it is wrapped by the ribbons 54 guided under the bending elements 52, 53 and contoured and closed in a tube-like configuration so as to form two cylindrical beads of agglomerate having a pasty consistency, which by depositing on the cylindrical surface of the mandrel, due to the axial translational motion of the latter, wrap with a continuous tension around the mandrel, forming a layer 5, 6 which covers uniformly the previously applied layer 2.

As can be seen, the described apparatus therefore achieves the proposed aim and objects. In particular, by adjusting the speed of the gearmotors 42, 69, it allows to control the flow of inert material and agglomerate. At the same time, by controlling the flows of binder and of any catalysts by means of a traditional pumping system, it is possible to optimize the percentages of the components of the agglomerate, reducing the excesses of binder which would otherwise be lost or poorly used and ensuring constancy of the characteristics.

An important prerogative of the described apparatus is provided by the friction clutch systems 38, 63, which allow to activate or deactivate the feeder 12 and respectively the mixer 23 so as to provide one or two beads of agglomerate and obtain a single- or double-thickness intermediate layer 5, 6.

Another important advantage of the described apparatus is that it can be installed at different levels with respect to the level of the mandrel 4, particularly above it, thus allowing the simple deposition of the agglomerate directly on the mandrel and its distribution by means of spatulas or other devices capable of leveling its irregularities.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus for mixing granular inert material with a resin binder in order to form, on a rotating cylindrical mandrel (4), a tubular manufactured article composed of an inner layer (2) which adheres to the surface of the mandrel, an outer layer (3) and an intermediate layer (5, 6) constituted by a uniform agglomerate obtained from an amalgamation of said granular inert material with said resin binder, **characterized in that** it comprises at least one mixing line composed of a feeder (12, 13) which is connected to a duct (14, 15) for feeding said granular inert material and a discharge outlet (17, 18), a mixing device (23, 24) which has an intake port (21, 22) which is suitable to receive said granular inert material from said discharge outlet (17, 18) of said feeder and connections (48, 49) for feeding said resin binder in said mixing device, said mixing device being suitable to form said uniform agglomerate and to apply it onto said inner layer (2) so as to form said intermediate layer.

2. The apparatus according to claim 1, **characterized in that** said feeder (12, 13) is constituted by a cylindrical jacket (10, 11) inside which there is a screw feeder (19, 20) which is actuated by a motor assembly (27), said jacket being connected to a duct (14, 15, 16) for feeding said granular inert material and an outlet (17, 18) for discharging said material into a mixing device (23, 24) arranged below said feeder.

3. The apparatus according to one of claims 1 and 2, **characterized in that** said mixing device (23, 24) is constituted by a cylindrical jacket (44, 45) inside which there is a screw feeder (46, 47) which is actuated by a motor assembly (59), said jacket (44, 45) being provided with an intake port (21, 22) which is connected to the discharge outlet (17, 18) of said feeder (12, 13) in order to receive therefrom the granular inert material and a discharge port (56) for depositing said uniform agglomerate on said inner layer (2).

4. The apparatus according to claim 3, **characterized in that** said jacket (44) of said mixing device (23, 24) has, downstream of said intake port (21, 22), connectors (48, 49) for introducing in said jacket said resin binder and catalysts.

5. The apparatus according to one of claims 3 and 4, **characterized in that** a bending element (52, 53) is associated with the output end of said jacket (44, 45) and comprises a funnel-shaped chute which is arranged below said end and is provided with a nozzle (56) which is aligned with said screw feeder (46, 47), said bending element being suitable to bend longitudinally a ribbon (54) which is permeable to said binder so as to wrap around said agglomerate and form a sort of bead which is suitable to be deposited on said inner layer (2) and wrap around said mandrel.

6. The apparatus according to claim 5, **characterized in that** said ribbon (54) is constituted by a fabric, a non-woven fabric or the like which is permeable to the binder.

7. The apparatus according to one of claims 2 to 6, **characterized in that** it comprises two screw feeders (12, 13), which are mutually parallel and superimposed on respective screw mixers (23, 24), each pair of said devices being actuated by its own actuation assembly (27, 59).

8. The apparatus according to claim 7, **characterized in that** each actuation assembly (27, 59) comprises a frame (27), a motor element (42, 69) for driving a first screw feeder (20, 47), which is mounted on said frame and is provided with an output shaft (26a, 68), on which a first pulley (41, 66) is keyed, a friction clutch system (38, 63) which is arranged on the shaft (25, 57) of the second screw feeder (19, 47) and is functionally associated with a second pulley (39, 64) arranged coaxially to said shaft (25, 57), a driving belt (40, 65) which is closed in a loop around said pulleys (41, 66; 39, 64), said friction clutch system (38, 63) being controlled by actuation means which are suitable to produce the coupling and uncoupling of said second pulley (39, 64) with respect to said shaft (25, 57) in order to drive or respectively stop said second screw feeder (19, 47).

## Amended claims

### Amended claims in accordance with Rule 137(2) EPC.

**1.** An apparatus for forming, on a rotating cylindrical mandrel (4), a tubular manufactured article composed of an inner layer (2) which adheres to the surface of the mandrel, an outer layer (3) and an intermediate layer (5, 6) constituted by a uniform agglomerate obtained from an amalgamation of granular inert material with resin binder, the apparatus comprising: at least one mixing line composed of a feeder (12, 13) which is connected to a duct (14, 15) for feeding said granular inert material and a discharge outlet (17, 18); a mixing device (23, 24) for mixing the granular inert material with the resin binder in order to form said uniform agglomerate and to apply it onto said inner layer (2) so as to form said intermediate layer (5, 6), said mixing device being constituted by a cylindrical jacket (44, 45) having mounted therein a screw feeder (46, 47) actuated by a motor assembly (59), said jacket (44, 45) being provided with an intake port (21, 22) which is connected to said discharge outlet (17, 18) of said feeder (12, 13) in order to receive therefrom the granular inert material, with connections (48, 49) for feeding therein said resin binder and with a discharge port located at an output end of said jacket (44, 45) for depositing said uniform agglomerate on said inner layer (2), **characterized in that** it further comprises a bending element (52, 53) that is associated with the output end of said jacket (44, 45) for guiding and wrapping a ribbon (54), said bending element (52, 53) comprising a funnel-shaped chute which is arranged below said jacket end and is provided with a nozzle (56) which is aligned with said screw feeder (46, 47), said funnel-shaped chute being suitable to bend longitudinally the lateral edges of said ribbon (54) which is permeable to said binder so as to wrap the ribbon (54) around said agglomerate and form a bead which is suitable to be deposited on said inner layer (2) and wrap around said mandrel (4).

**2.** The apparatus according to claim 1, **characterized in that** said feeder (12, 13) is constituted by a cylindrical jacket (10, 11) inside which there is a screw feeder (19, 20) which is actuated by a motor assembly (27), said jacket being connected to a duct (14, 15, 16) for feeding said granular inert material and an outlet (17, 18) for discharging said material into said mixing device (23, 24) arranged below said feeder (12, 13).

**3.** The apparatus according to claim 1 or 2, **characterized in that** said connections (48, 49) are located downstream of said intake port (21, 22).

**4.** The apparatus according to any of the preceding claims, **characterized in that** said ribbon (54) is constituted by a fabric, a non-woven fabric or the like which is permeable to the binder.

**5.** The apparatus according to any of the preceding claims, **characterized in that** it comprises two screw feeders (12, 13), which are mutually parallel and superimposed on respective screw mixers (23, 24) forming said mixing device, each pair of said feeders (12, 13) and mixers (23, 24) being actuated by its own actuation assembly (27, 59).

**6.** The apparatus according to claim 5, **characterized in that** each actuation assembly (27, 59) comprises a frame (27), a motor element (42, 69) for driving a first screw feeder (20, 47), which is mounted on said frame and is provided with an output shaft (26a, 68), on which a first pulley (41, 66) is keyed, a friction clutch system (38, 63) which is arranged on the shaft (25, 57) of the second screw feeder (19, 47) and is functionally associated with a second pulley (39, 64) arranged coaxially to said shaft (25, 57), a driving belt (40, 65) which is closed in a loop around said pulleys (41, 66; 39, 64), said friction clutch system (38, 63) being controlled by actuation means which are suitable to produce the coupling and uncoupling of said second pulley (39, 64) with respect to said shaft (25, 57) in order to drive or respectively stop said second screw feeder (19, 47).
